Europäisches Patentamt

European Patent Office

Office européen des brevets

(11) Publication number: **0 106 485**
**B1**

## (12) EUROPEAN PATENT SPECIFICATION

(45) Date of publication of patent specification: **07.01.88**

(21) Application number: **83305121.2**

(22) Date of filing: **05.09.83**

(51) Int. Cl.⁴: **B 01 D 29/14,** B 01 D 29/38

(54) **Filter element.**

(30) Priority: **11.09.82 GB 8225981**

(43) Date of publication of application:
**25.04.84 Bulletin 84/17**

(45) Publication of the grant of the patent:
**07.01.88 Bulletin 88/01**

(84) Designated Contracting States:
**AT BE CH DE FR GB IT LI LU NL SE**

(56) References cited:
**DE-A-2 442 345**
**DE-A-3 009 986**

(73) Proprietor: **Endless Energy Group Limited**
**Endless House 52-54 Endless Street**
**GB-Salisbury Wiltshire SP1 3UH (GB)**

(72) Inventor: **Chambers, John**
**14 Henleaze Road**
**Westbury-on-Trym Bristol B29 4E1 (GB)**

(74) Representative: **Dunlop, Brian Kenneth Charles**
**et al**
**c/o Wynne-Jones, Lainé & James 22 Rodney Road**
**Cheltenham Gloucester GL50 1JJ (GB)**

Courier Press, Leamington Spa, England.

### Description

This invention relates to filter elements and associated apparatus for use with a fluid filter, which is intended to be backwashed during its operation (for example, filters which are used in air conditioning apparatus incorporating air cooling towers).

It is known to increase the economic efficiency of an air conditioning apparatus incorporating an air cooling tower, by circulating water from the tower directly through the heat exchangers of the system, whenever the external temperature falls to a suitable level. For this to be achieved, it is necessary to filter the cooling tower liquid prior to its introduction into the heat exchanger circuit, because of the damaging waste which is picked up from the atmosphere by the cooling tower water. However, it has been found that certain type of waste, for example cotton seed waste, clog existing filter elements in such a way that they cannot be satisfactorily cleansed by simply backwashing. Further such blocking of the element causes the backwash system to be activated frequently giving rise to considerable risk of the air cooling tower tank being drained down and air being introduced into the system.

DE—A—2442 345 discloses a filter comprising an elongate spring held under compression during normal filtration and being extensible by means of a piston connected to a feed outlet. With this arrangement the spring coils can be enlarged to allow backwash. DE—A—300980 shows that lateral projection can be used to define a minimum filter gap.

It is an object of the invention to provide filter elements which reduce the risk of a filter being undesirably blocked.

From one aspect the invention consists in a filter element for filtering fluids comprising an elongate spring held under compression during normal filtration and having extension means for extending the spring to enlarge the filter gaps defined between the spring coils to allow backwashing characterised in that the extension means extend the spring automatically in response to a backwash pressure.

The lever mechanism may include a pivotable lever having one end attached to a block which is movable relative to the element and its other end attached to the body, such that backwash pressure causes movement of the block, and hence the lever, in a sense to extend the body. The other end of the lever may be connected to the body by a slidable carriage. In a preferred arrangement there are a pair of levers interconnected in a scissor formation.

The body may be slidably mounted in an external cage, which may comprise at least three axially extending rods and which may include swirl inducing formations along at least part of its length.

The body may be at least partially constituted by a spring and the gaps may be defined by adjacent portions of the spring. The spring may be formed with convergent faces directed in the direction of backwash flow and may have spaced lateral projections along its length for defining the minimum spacing of the gaps.

The element may include means for oscillating the body between its normal and extended positions to enhance freeing of contaminant during backwash, in which case the extension means may co-operate with means urging the body into its normal filtering position to provide automatically the oscillation.

The element may further comprise chassis means for retaining the spring for axial extension and having means for holding one end of the spring and means for linking the closure to the spring whereby backwash pressure on the closure causes extension of the spring enlarging the filter gaps; and a further spring for maintaining the first-mentioned spring in its compressed position during normal flow and arranged such that the first-mentioned spring will oscillate axially upon backwash flow.

The invention may be performed in various ways, and one specific embodiment will now be described, with modifications, by way of example, with reference to the accompanying drawings, in which:

Figure 1 is a schematic diagram of a liquid circuit for a known air conditioning apparatus;

Figure 2 is a part-sectional side view of a filter element for use in the filtering of the circuit of Figure 1;

Figure 3 is an enlarged detail of A in Figure 2;

Figure 4 is a cross-sectional view along the lines IV—IV in Figure 2, to a different scale;

Figure 5 is a schematic representation of an alternative filter element;

Figure 6 is an enlarged sectional view of the end marked B in Figure 5;

Figure 7 is a schematic side view of a filter and a backwash reservoir; and

Figure 8 is a part-cutaway perspective view of the reservoir of Figure 7.

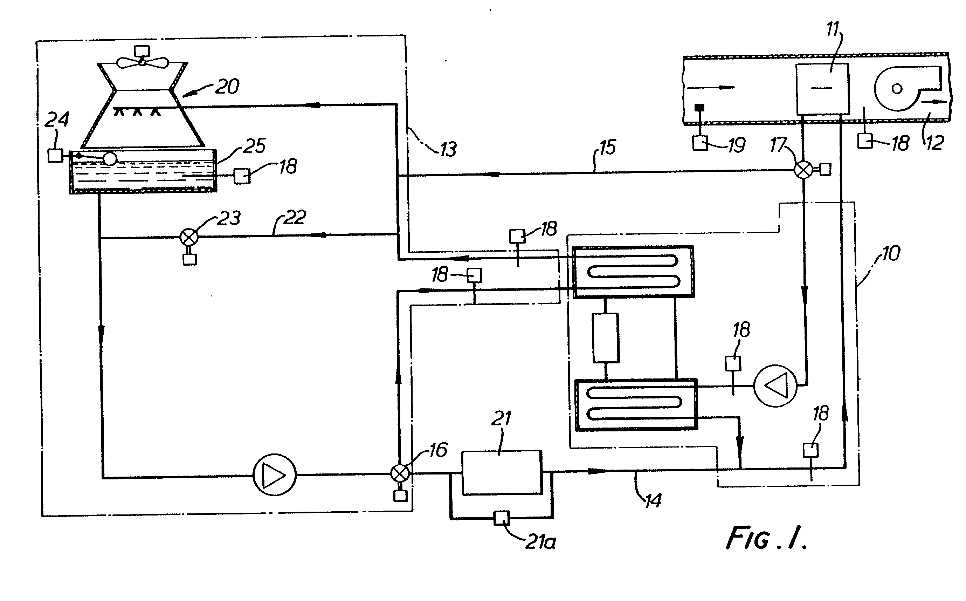

The air conditioning system shown in Figure 1 includes a chiller 10, a heat exchanger 11, a cooling tower 20 and a filter 21. These elements are interconnected such that the heat exchanger 11 can be cooled either by the chiller 10 or by water from the cooling tower 20. In this latter case the water must first be filtered by filter 21. This system is described in detail in our co-pending British Patent Application No. 2,093,982A. Conveniently the filter 21 contains a number of elongate filter elements through which the water normally flows from outside to in. Provision is made for backwashing the element either simultaneously or separately when the elements become blocked.

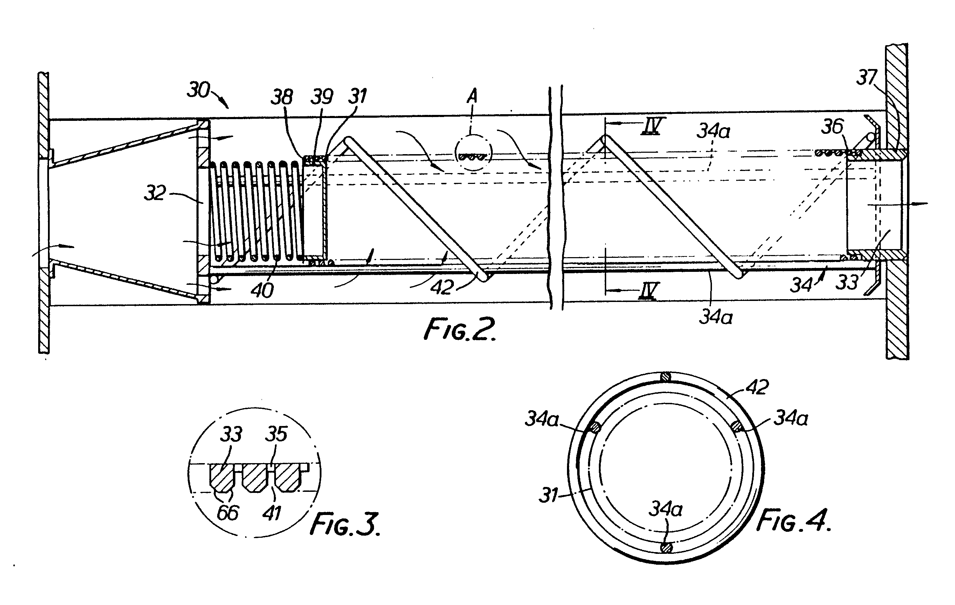

Figure 2 shows a filter element according to the invention for use in the filter 21. The filter element generally indicated at 30 comprises a spring 31, which is held coaxially with and between an inlet 32 and an outlet 33 by means of a cage 34. The normal flow through the filter is indicated by the solid arrows. As can be seen in Figure 3, the spring 31 has a generally square cross-section and is formed with lateral projections 35 along one edge. These projections define a minimum filter gap between adjacent segments of the spring. One end 36 of the spring is welded to an annulus 37 which is fixed in the outlet 33, whilst the other end 38 is secured to a cup-shaped member 39 which closes it.

The cup-shaped member 39 forms an abutment for a compression spring 40 which serves to compress the filter spring 31, during normal operation, to maintain the minimum filter gap.

When the filter element is backwashed the interior of the spring 31 is subjected to the full system pressure, whilst the exterior of the spring 31 is connected to atmosphere. This causes a considerable pressure drop across the cup-shaped member 39 moving it axially to the left against the action of compression spring 40 and hence causing the spring 31 to be extended. This extension increases the size of the filter gaps 41, enhancing freeing of the contaminant caught in the gaps. As the gaps open there will be a slight drop. in the effective system pressure with the result that the cup-shaped member 39 will move slightly to the right decreasing the size of gaps 31. The pressure will then build up again and it will be seen that the spring will oscillate in length further improving the freeing of the caught particles.

The cage 34 comprises three axially extending rods 34a interconnected at both ends and contained by a spiral wire 42. This construction of cage is particularly advantageous, because the spring decreases slightly in cross-section during extension and there is thus no frictional snagging between the spring 31 and the cage 34. This helps to ensure equal opening of the gaps 41.

It will be appreciated that the spiral wire 42 will help to swirl liquid along the length of the element 30 during normal flow causing the full length of the filter to be used.

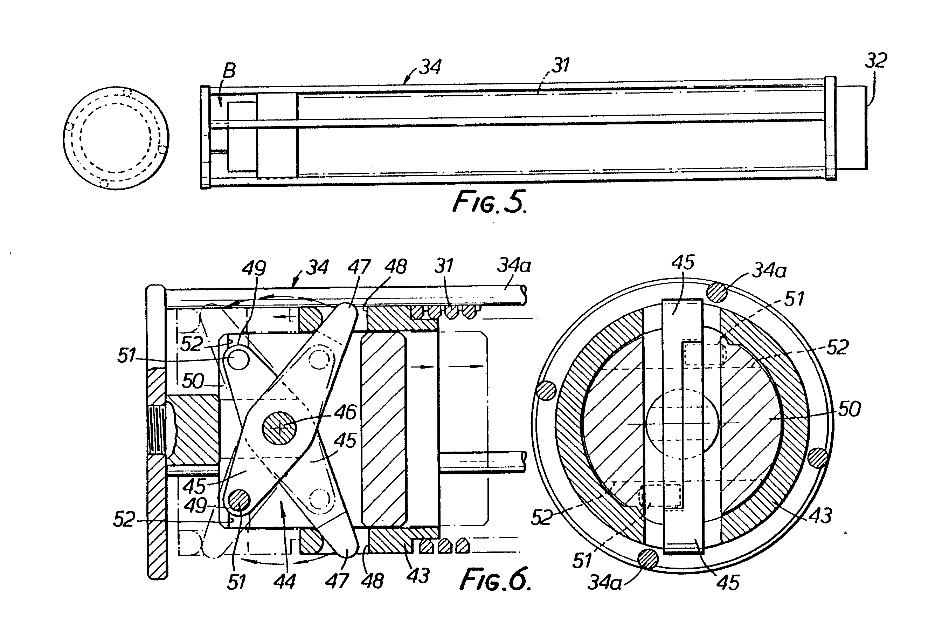

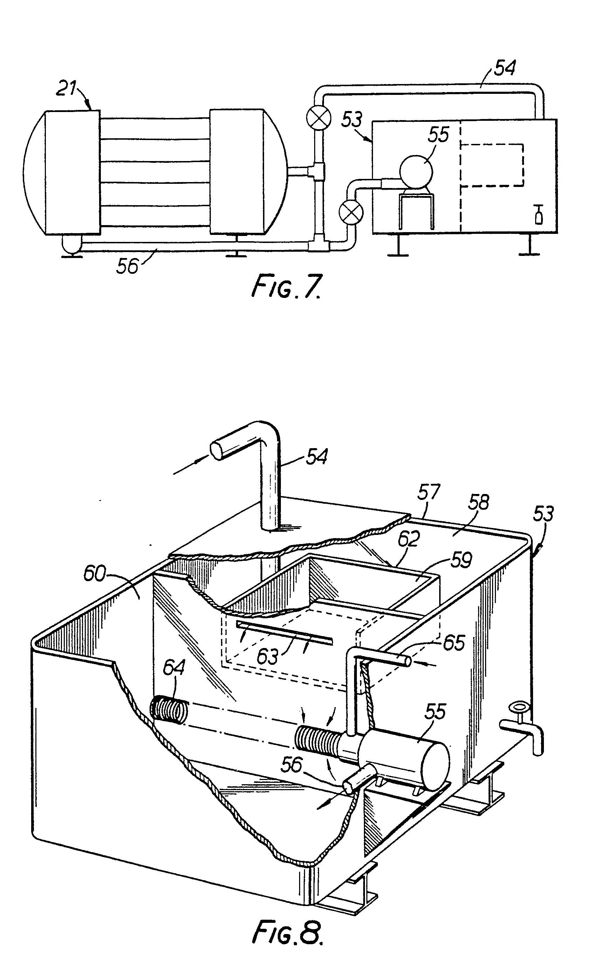

In a number of known filters the flow, during normal filtering, is from inside to out and therefore a different extension mechanism is required. An example is shown in Figures 5 and 6. In this embodiment the other end 38 of the spring 31 is connected to a slidable carriage 43. This carriage can be moved axially to the left (i.e. to extend the spring) by a lever mechanism generally indicated at 44. The lever mechanism comprises a pair of levers 45 connected in scissor formation and pivoted between their ends about a fixed pivot 46. One end 47 of each lever is located in a respective aperture 48 in the carriage 43, whilst the other end 49 is slidably mounted on a block 50 by means of a respective pin 51. The block 50 is axially slidable within the cage 34 and each pin is slidably mounted in the block by means of a respective lateral slot 52.

During normal flow the block 50 is maintained in its solid line position by means of the liquid pressure and/or suitable springs (not shown) acting on the block 50 and/or the carriage 43. When backwash occurs the outside of the element experiences the full system pressure, whilst the inside is connected to atmosphere. The result is that the block 50 is urged axially to the right causing the levers 45 to open, as indicated by the arrows, drawing the carriage 43 into its dotted line or lefthand position and hence extending the spring 31.

Currently when filters are backwashed the liquid is normally poured straight into the drain. This is wasteful and in certain parts of the world illegal. In addition the sudden removal of large quantities of liquid from the system can cause the cooling tower tanks or pans to be drained down so quickly that air is introduced into the system. Figures 7 and 8 show an arrangement for reducing or avoiding these problems.

As can be seen in Figure 7 the filter is connected to a reservoir 53 by a backwash drainpipe 54. The reservoir 53 is further connected to the filter 21, via a pump 55, by means of an inlet pipe 56. Referring now to Figure 8 the reservoir 53 comprises a tank 57, which is sub-divided into internal compartments 58, 59 and 60. The compartments are interconnected by weirs 61 and 62 such that water initially flows into the compartment 58, then into 59 and finally into 60. This arrangement ensures that the majority of the contaminant settles in the compartment 58 and can be removed, for example through a draincock 63. A filter element 64, which may be, for example, the element shown in Figure 2, is disposed in the downstream-most compartment 60. The interior of the element 64 is connected to the pump 55 so that water can be drawn from the compartment 60, through the filter element 64, and pumped back into the system via the inlet pipe 56. Provision for backwashing the element 64 is schematically indicated at 65.

The reservoir 53 can be utilised in a number of ways. Most simply it can be used merely for reinjecting backwash fluid resulting from normal backwash of the filter. However, more beneficially the control of the air conditioning system can be arranged so that the elements are backwashed intermittently and fluid from the compartment 60 can be reinjected in the periods between backwash. Indeed to guard against draining down of the cooling tower it is preferred that each backwash is limited to a certain quantity of liquid, e.g. 10 gallons, so that backwashing occurs almost continuously on an intermittent basis.

It will be appreciated that the reservoir 53 may form a permanent attachment to the liquid system, but alternatively it may be utilised as a separate temperature unit for cleansing dirty systems, particularly on a pre-commissioning basis.

Returning to the filter elements 30 the backwash pressure activated extension mechanisms may be replaced by externally operable piston, rams etc., which can be controlled in accordance with the operation of the filter. The provision of convergent faces 66 on the spring 31 may also enhance opening of the gaps 41. The spring 31 may be located around a perforate cylinder rather than by the cage 34, but this is less satisfactory as frictional snagging will occur.

## Claims

1. A filter element for filtering fluids comprising an elongate spring (31) held under compression during normal filtration and having extension means (39 or 43, 44, 50) for extending the spring (31) to enlarge the filter gaps (41) defined between the spring coils to allow backwashing characterised in that the extension means (39 or 43, 44, 50) extend the spring automatically in response to a backwash pressure.

2. An element as claimed in claim 1 wherein the extension means (39 or 43, 44, 50) comprise a closure (39) extending across the internal cross section of the spring (31) or a piston or ram (50).

3. An element as claimed in claim 2, comprising chassis means (34a, 37, 42) for retaining the spring (31) for axial extension and having means (37) for holding one end of the spring and means (38) for linking the closure (39) to the spring whereby backwash pressure on the closure causes extension of the spring (31) enlarging the filter gaps (41); and a further spring (40) for maintaining the first-mentioned spring (31) in its compressed position during normal flow and arranged such that the first-mentioned spring (31) will oscillate axially upon backwash flow.

4. A reservoir for use with a backwashable filter, comprising a tank (53) for receiving backwash liquid, a filter element (64) as claimed in any one of claims 1 to 3, disposed in the tank (53) and means (55, 56) for reinjecting filtered backwash liquid into the filter or its associated system.

5. A reservoir as claimed in claim 4, further comprising an intermittently drivable pump (55) downstream of the filter element (64).

6. A reservoir as claimed in claim 4 or claim 5 further including means (55, 56) for backwashing the filter element.

## Patentansprüche

1. Filterelement zum Filtern von Fluiden, mit einer länglichen Feder (31), die während der normalen Filterung zusammengedrückt ist, und mit Mitteln (39 oder 43, 44, 50) zum Auseinanderziehen der Feder (31) zwecks Vergrößerung der Filterspalte (41) zwischen den Windungen der Feder, um ein Rückspülen zu ermöglichen, dadurch gekennzeichnet, daß die Mittel (39 oder 43, 44, 50) den Feder automatisch als Reaktion auf einen Rückspüldruck auseinanderziehen.

2. Filterelement nach Anspruch 1, wobei die Mittel (39 oder 43, 44, 50) zum Auseinanderziehen der Feder (31) einen Deckel (39), der sich über den inneren Querschnitt der Feder (31) erstreckt, oder einen Kolben oder Plunger (50) aufweisen.

3. Filterelement nach Anspruch 2, mit einem Halter (34a, 37, 42) zur Halterung der Feder (31) in ihrer axialen Erstreckung und Mitteln (37) zum Festhalten eines Endes der Feder (31) sowie Mitteln (38) zur Befestigung des Deckels (39) an der Feder (31), wobei der Rückspüldruck auf den Deckel ein Auseinanderziehen der Feder (31) und eine Vergrößerung der Filterspalte (41) bewirkt, und mit einer weiteren Feder (40), welche die erste Feder (31) während der normalen Strömung in ihrer zusammengedrückten Lage hält und so angeordnet ist, daß die erste Feder (31) beim Auftreten einer Rückspülströmung axial oszilliert.

4. Reservoir zur Verwendung mit einem rückspülbaren Filter, mit einem Tank (53) zur Aufnahme von Rückspül-Flüssigkeit, einem Filterelement (64) nach einem der Ansprüche 1 bis 3 innerhalb des Tanks (53) und Mitteln (55, 56) zum Wiedereinspritzen von gefilterter Rückspülflüssigkeit in den Filter oder das ihm zugeordnete System.

5. Reservoir nach Anspruch 4, gekennzeichnet durch eine intermittierend antreibbare Pumpe stromab des Filterelements (64).

6. Reservoir nach Anspruch 4 oder 5, gekennzeichnet durch Mittel (55, 56) zum Rückspülen des Filterelements.

## Revendications

1. Un élément de filtrage pour fluides comprenant un ressort de forme allongée (31) maintenu comprimé pendant les opérations normales de filtrage et des moyens d'extension (39 ou 43, 44, 50) pour étirer le ressort (31) ce qui agrandit les interstices (41) du filtre définis par l'écartement entre les spires du ressort pour permettre un lavage à contre courant caractérisé en ce que les moyens d'extension (39 ou 43, 44, 50) allongent le ressort automatiquement en réponse à la pression du lavage à contre courant.

2. Un élément selon la revendication 1, caractérisé en ce que les moyens d'extensions (39 ou 43, 44, 50) comprennent un obturateur (39) couvrant la section interne du ressort (31) ou un piston ou clapet (50).

3. Un élément selon la revendication 2, comprenant des pièces de châssis (34a, 37, 42) pour maintenir le ressort (31) lors de son allongement longitudinal et ayant des moyens (37) pour fixer l'une des extrémités du ressort et des moyens (38) rattachant l'obturateur (39) au ressort caractérisé en ce que la pression sur l'obturateur lors du lavage à contre courant provoque l'allongement du ressort (31) ce qui agrandit les interstices (41) du filtre; et en ce qu'un ressort additionnel (40) maintient le dit premier ressort (31) dans sa position comprimée lors de l'écoulement normal et qu'il est disposé de telle sorte que le dit premier ressort (31) entre en oscillations longitudinales lors du lavage à contre courant.

4. Un réservoir utilisable avec un filtre lavable à contre courant caractérisé en ce qu'il comprend un réservoir (53) pour recevoir le liquide de lavage, un élément de filtrage (64) selon l'une quelconque des revendications 1 à 3 disposé dans le réservoir (53), et des moyens (55, 56) pour réinjecter le liquide filtré de lavage dans le filtre ou dans le système associé.

5. Un réservoir selon la revendication 4, comprenant de plus une pompe (55) pouvant être mis en action de manière intermittente et située

7

0 106 485

8

en aval de l'élément de filtrage (64).

6. Un réservoir selon la revendication 4 ou 5 comprenant de plus des moyens (55, 56) pour laver à contre courant l'élément de filtrage.

FIG. I.

FIG.2.

FIG.3.

FIG.4.

0 106 485

*FIG.5.*

*FIG.6.*

FIG.7.

FIG.8.